# EUROPÄISCHE PATENTSCHRIFT

(11) **EP 3 753 064 B1**
(45) Veröffentlichungstag und Bekanntmachung des Hinweises auf die Patenterteilung: **13.03.2024**
(21) Anmeldenummer: 19703259.2
(22) Anmeldetag: 28.01.2019
(51) Int. Cl.: H01M 10/04, H01M 10/625, H01M 10/6556, H01M 10/6551, H01M 10/6567, H01M 10/613

(54) **BATTERIE FÜR EIN KRAFTFAHRZEUG**
BATTERY FOR A MOTOR VEHICLE
BATTERIE DE VÉHICULE AUTOMOBILE

(30) Priorität: 14.02.2018 DE 102018202263
(43) Veröffentlichungstag der Anmeldung: 23.12.2020
(73) Patentinhaber: Vitesco Technologies Germany GmbH, 93055 Regensburg (DE)
(72) Erfinder: GENTZ, Matthias, 81737 München (DE)
(74) Vertreter: Vitesco Technologies
(86) Internationale Anmeldenummer: PCT/EP2019/051940
(87) Internationale Veröffentlichungsnummer: WO 2019/158346

(56) Entgegenhaltungen:
- DE-A1-102016 125 705
- DE-A1-102016 213 832
- DE-A1-102017 116 219
- US-A1- 2011 059 347
- US-A1- 2015 255 837
- US-A1- 2016 111 761

## Beschreibung

Die Erfindung betrifft die Batterietechnik. Insbesondere betrifft die Erfindung eine Batterie für ein Kraftfahrzeug welche als Gehäuseboden ein Strangpressprofil aufweist. Darüber hinaus betrifft die Erfindung ein Fahrzeug und ein Verfahren zum Herstellen einer Batterie.

Batteriemodule sind gegen das Eintreten von Fremdstoffen, insbesondere Wasser und dem undefinierten Austreten von Gasen, zu schützen. Die Gehäuse gewährleisten zudem Crash- und Crushsicherheit und dienen dem Schutz der Zellen. Aus diesem Grund ist es üblich die Batteriemodulgehäuse aus einer Wanne (Gehäuseboden) und einem Deckel zu realisieren. Die Wanne besteht zumeist aus Kunststoff oder einem metallischen Werkstoff und kann einteilig oder mehrteilig ausgeführt sein, wobei bei mehrteiligen Varianten die Gehäuseteile zu einem geschlossenen Gehäuse abgedichtet werden müssen. Metallische Gehäuse bieten dabei Vorteile bei der Entwärmung und der Stabilität der Batteriemodule, sind oft aber auch schwerer als Kunststoffgehäuse. Allen Gehäusen ist gemein, dass Sie eine passive oder aktive Kühlung der Batteriezellen ermöglichen sollen. Weiterhin sind das Vorspannen der Batteriezellen und der mechanische Schutz oft gewünschte Funktionen.

Einteilig ausgeführte Gehäuseböden sind zumeist aus Kunststoff ausgeführt, was zwar zu guten Freiheitsgraden bei der Gehäusegestaltung führt, aber auch eine geringe Formstabilität (Crash, Crush) sowie geringere thermische Leitfähigkeit gegenüber Metall aufweist. Weiterhin ist das "Vorspannen" der Batteriezellen bei Kunststoffgehäusen nicht ohne weiteres realisierbar. Einteilig ausgeführte Metallgehäuse sind oft teuer (Druckguss, Fließpressen) oder in Ihrer gestalterischen Freiheit eingeschränkt. Metallgehäuse können auch mehrteilig ausgeführt sein, jedoch müssen diese dann zu einem geschlossenen Gehäuse abgedichtet werden. Metallgehäuse eignen sich eher für das Vorspannen der Batteriezellen und können als "Zuganker" eingesetzt werden. Kühlungselemente (passiv oder aktiv) sind meistens separate Bauteile.

Aus der US 2016 111 761 A1 ist ein System zur Anordnung von Batteriezellen bekannt. Dabei ist vorgesehen, dass die Batteriezellen in einen kammartigen Grundträger angeordnet werden, der eine Mehrzahl von Kühlkanälen aufweist.

In der US 2011 059 347 A1 ist eine Batteriemodul mit einer exzellenten Wärmeableitung beschrieben. Zwischen Batteriezellen werden Wärmeableitelement angeordnet, die die Batteriezellen überragen. Auf den Wärmeableitelementen wird eine kammartige Kühlstruktur angeordnet.

Die DE 10 2017 116 219 A1 beschreibt eine Batteriezellenanordungsträgerstruktur, bei der eine Batteriezellenträgerstruktur eine Mehrzahl von zueinander beabstandeter Tragrippen aufweist, zwischen denen jeweils eine Batteriezelle angeordnet ist.

Aus der US 2015 255 837 A1 ist ein Energiespeichergehäuse zur Aufnahme von Batteriezellen bekannt, das auf der Außenseite eine Kühlrippenstruktur aufweist.

Es kann als Aufgabe der Erfindung angesehen werden eine alternative, kostengünstige, modulare Batterielösung bereitzustellen, die in einfacher Weise ein Verspannen von Batteriezellen ermöglicht.

Die Aufgabe der Erfindung wird mittels der Gegenstände der unabhängigen Ansprüche gelöst. Weitere Vorteile und Weiterbildungen sind in den Unteransprüchen angegeben.

Es sind eine Batterie, ein Fahrzeug, ein Verfahren zum Herstellen einer Batterie gemäß den Merkmalen der unabhängigen Ansprüche angegeben.

Die beschriebenen Ausführungsbeispiele betreffen gleichermaßen die Batterie, das Fahrzeug sowie das Verfahren. Mit anderen Worten können Merkmale die im Folgenden in Bezug auf die Batterie beschrieben werden, ebenso in dem Fahrzeug sowie dem Verfahren enthalten sein, und umgekehrt.

Gemäß einem ersten Aspekt der Erfindung ist eine Batterie für ein Kraftfahrzeug angegeben. Die Batterie weist einen Gehäuseboden und mindestens eine Batteriezelle auf. Wie im Folgenden noch detailliert beschrieben wird, kann die Batterie auch mehrere Batteriezellen, die beispielsweise zu einem sogenannten "Stack" zusammengefasst sind, aufweisen. Typischerweise werden mehrere Batteriezellen in der Batterie angeordnet. Weiterhin ist der Gehäuseboden als Strangpressprofil in Form einer Wanne, vorzugsweise in Form einer U-förmigen Wann mit offenen Stirnseiten, ausgeführt.

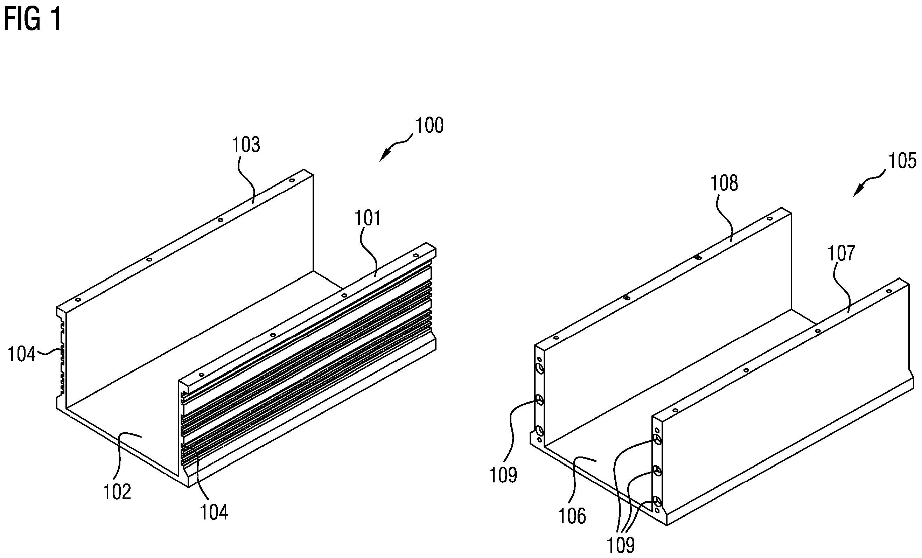

Mit anderen Worten wird ein neues Batteriekonzept vorgestellt, bei dem der Gehäuseboden als Strangpressprofil ausgeführt ist. Das Strangpressprofil kann vorzugsweise aus Aluminium ausgeführt sein, da dieses leicht und formstabil ist. Ebenso können in dem Strangpressprofil Kühlrippen zur passiven Luftkühlung oder auch Kühlkanäle zur aktiven Flüssigkeitskühlung enthalten sein. Die Stirnseiten des Strangpressprofils sind dabei zunächst offen, wie diese beispielsweise den beiden Ausführungsbeispielen der Figur 1 entnommen werden kann. Vorteilhafterweise kann das Strangpressprofil gleichzeitig als Zuganker zum Vorspannen von prismatischen und quer eingelegten Batteriezellen dienen. Jedoch kann das erfindungsgemäße Strangpressprofil auch bei längs eingelegten Pouch-Zellen ebenfalls zum Vorspannen der Batteriezellen verwendet werden (in Verbindung mit einem kraftflussschließendem Element auf der offenen Oberseite, z.B. dem Deckel).

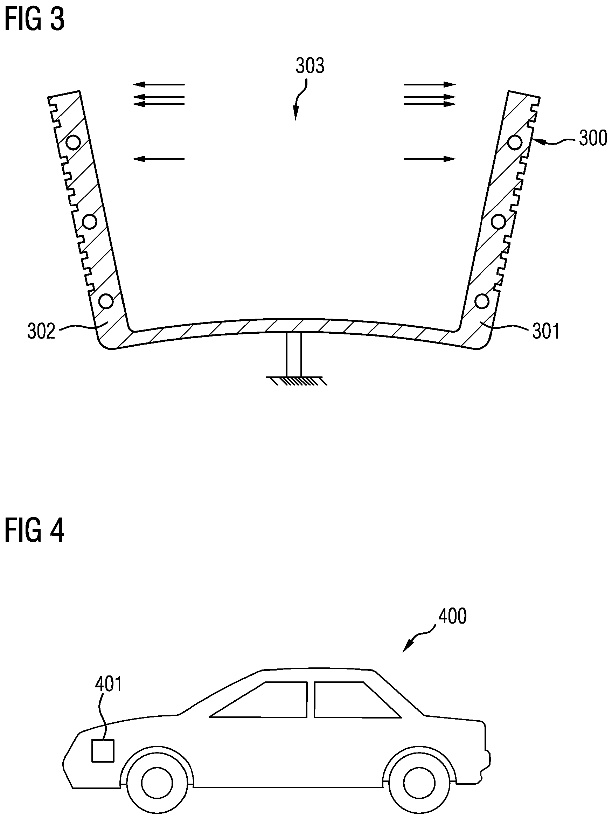

Ein weiterer Vorteil der Verwendung eines Strangpressprofils als Gehäuseboden des Batteriegehäuses, insbesondere des wannenförmigen bzw. des im Querschnitt u-förmigen Gehäusebodens, ist durch die Möglichkeit des elastischen Aufbiegens des Strangpressprofils gegeben. Dies wird auch weiter im erfindungsgemäßen Verfahren beschrieben werden. Um die Batteriezellen formschlüssig in das Gehäuse zu integrieren, wird das Strangpressprofil in seinem elastischen Bereich aufgebogen, und kann nach der Integration der Batteriezellen "zurückgebogen" werden. Bildlich beschrieben erfolgt dies so, dass die beiden Seitenwände, wie sie beispielsweise in den beiden Ausführungsbeispielen der Figur 1 gezeigt sind, seitlich aufgebogen werden, so dass die Batteriezellen zwischen die beiden Seitenwände integriert werden können. Der aufgebogene Zustand des Strangpressprofils ist auch in der Figur 3 gezeigt.

Die beiden zunächst offenen Stirnseiten des Strangpressprofils können beispielsweise durch die Druckplatten oder die Endkappen dicht verschlossen werden. Dies kann beispielsweise durch Verschweißen der Endkappen an den Stirnseiten des Strangpressprofils und/oder mit dem Aufbringen einer oder mehrerer Dichtungen erfolgen. Insbesondere kann damit eine Flüssigkeitsdichtigkeit und/oder Gasdichtigkeit des dabei entstehenden Gehäuses der Batterie bereitgestellt werden. Solche Endkappen können zusätzlich zur Dichtfunktion auch noch Kühlkanäle oder Anschlüsse enthalten, um einen geschlossenen Kühlkreislauf zu ermöglichen und kundenspezifisch können diese auch angepasst werden. Je nach Anwendungsfall, können diese Endkappen beispielsweise aus Kunststoff oder Metall und in ihrer geometrischen Ausführung einfach oder komplex gestaltet sein.

Mit anderen Worten wird gemäß der Erfindung ein Strangpressprofil in Wannenform bzw. in U-Form als Batteriemodulgehäuse verwendet, welches an den Stirnseiten offen ist. Das Strangpressprofil weist daher einen ersten Bodenabschnitt auf, von dem sich zwei Seitenflächen an gegenüberliegenden Seiten des Bodenabschnitts bzw. der Bodenfläche nach obenhin erstrecken. Dies ermöglicht sowohl den Einsatz passiver als auch aktiver Kühlung und ist modular einsetzbar. Durch das Aufbiegen des Strangpressprofils wird eine formschlüssige Integration der Batteriezellen erreicht. Das erfindungsgemäße Konzept kann gleichermaßen für prismatische und für Pouch-Batteriezellen eingesetzt werden.

Die Verwendung eines Strangpressprofils ist eine preisewerte Art zur Realisierung eines Batteriegehäuses, da Strangpressprofile als Meterware vorliegen. Durch gestalterische Maßnahmen können dabei für aktive und passive Varianten viele gleiche Bauteile, zum Beispiel Gehäusedeckel, Druckplatten, etc., Prozesse und Montageverfahren verwendet werden.

Weiterhin bietet sich damit die Möglichkeit einen Modulbaukasten zu realisieren. Das Strangpressprofil kann dabei in der Länge frei angepasst und anwendungsspezifisch optimiert werden. Weitere Vorteile der vorliegenden Erfindung sind die Einfachheit und der niedrige Preis des Strangpressprofils, die damit bereitgestellte Modularität des Batteriegehäuses, die Möglichkeit des einfachen Vorspannens der Batteriezellen sowie der einfache Toleranzausgleich.

Der Gehäuseboden des Batteriegehäuses der Batterie der vorliegenden Erfindung wird also mittels Strangpressen hergestellt. Das Strangpressen ist ein Umformverfahren zum Herstellen von Stäben, Drähten, Rohren und unregelmäßig geformten prismatischen Profilen. Das Strangpressen wird nach DIN 8582 zum Druckumformen gezählt, gemeinsam mit dem Fließpressen in der Untergruppe des Durchdrückens, und in DIN 8583 näher beschrieben.

Erfindungsgemäß ist das Strangpressprofil aus Metall, vorzugsweise aus Aluminium, ausgeführt. Das Strangpressprofil weist Kühlrippen zur passiven Luftkühlung der Batterie auf und/oder weist Kühlkanäle zur aktiven Flüssigkeitskühlung der Batterie auf.

Erfindungsgemäß weist das Strangpressprofil eine Bodenfläche und zwei sich im Wesentlichen von der Bodenfläche senkrecht erstreckenden seitlichen Seitenflächen auf. Dies ist schematisch in der Figur 1 gezeigt.

In einem weiter spezifizierten Ausführungsbeispiel verlaufen die Kühlrippen und/oder die Kühlkanäle zumindest in einer der beiden Seitenflächen des Strangpressprofils.

Vorteilhafterweise können in Strangpressprofilen verschiedenste gewünschte Formen der Kühlrippen und/oder der Kühlkanäle realisiert werden, ohne dass sehr hohe Kosten entstehen. Weiterhin können Formelemente des Profils (z.B. Geometrie der Kühlrippen) gezielt als Crash- und Crushstrukturen eingesetzt werden. Dabei können insbesondere sehr anwendungsspezifische Anforderungen leicht erfüllt werden, die bezüglich der Wärmeableitung und Crash-, Crushanforderungen an der Batterie bestehen.

Gemäß einem weiteren Ausführungsbeispiel der Erfindung weist die Batterie eine erste Endkappe zum Verschließen einer ersten Stirnseite des Strangpressprofils auf und weist eine zweite Endkappe zum Verschließen einer zweiten Stirnseite des Strangpressprofils auf.

In einem weiter spezifizierten Ausführungsbeispiel verschließen die beiden Endkappen die beiden Stirnseiten des Strangpressprofils mittels einer oder mehrerer Schweißnähte und/oder mittels einer oder mehrerer Dichtungen flüssigkeitsdicht und/oder gasdicht ab. Dies kann je nach Anwendung auch schon durch Druckplatten realisiert werden. Bei passiven Systemen kann unter Umständen auch auf Endkappen verzichtet werden, sofern die Druckplatten gas- und flüssigkeitsdicht verschweißt werden können.

Vorteilhafterweise kann in einem Ausführungsbeispiel eine oder beide Endkappen Kühlkanäle aufweisen, welche derart relativ zu den Kühlkanälen in den Seitenwänden des Strangpressprofils angeordnet sind, dass sie gemeinsam einen geschlossenen Kühlkreislauf innerhalb des dabei entstehenden Batteriegehäuses bilden. Das Batteriegehäuse weist in diesem und in anderen bevorzugten Ausführungsbeispielen neben dem Strangpressprofil auch die beiden Endkappen und einen Deckel sowie Druckplatten auf.

Erfindungsgemäß sind die beiden Seitenflächen des Strangpressprofils und die zumindest eine Batteriezelle derart zu einander angeordnet, dass die beiden Seitenflächen eine Vorspannkraft auf die Batteriezelle ausüben.

Um die Batteriezellen formschlüssig in den Gehäuseboden, i. e. in das Strangpressprofil, einzubringen, wird das Gehäuse elastisch aufgebogen und nach Integration der Zellen zurückgebogen (bzw. "federt" es zurück da nur elastisch aufgebogen). Im zurückgebogenen Zustand üben dann die beiden Seitenflächen eine Vorspannkraft auf die dazwischen befindliche Batteriezelle auf. (nur bei längs eingelegten pouch-Zellen - nicht Hauptanwendungsfall siehe dazu Montagereihenfolge auf Seite 12).

Bei quer zur Strangpressrichtung eingelegten Zellen (also prismatischen Zellen) kann der Zellstack über Druckplatten vorgespannt werden und die Seitenwände des Strangpressprofils gewährleisten nur eine gute thermische und mechanische Anbindung durch einen Formschluss. Dies ist für dieses Konzept der Hauptanwendungsfall. Bei längs eingelegten Zellen (pouch) muss nicht mit Druckplatten gearbeitet werden. Hier können die Seitenwände eine Vorspannung aufbringen, wenn diese dann zusätzlich durch ein weiteres mechanisches Element (z.B. ein fest angebundener Deckel) aufrecht erhalten wird.

Gemäß einem weiteren Ausführungsbeispiel der Erfindung weist die Batterie drei Wärmeleitelemente auf, die jeweils zwischen einer Seitenfläche sowie dem Gehäuseboden des Strangpressprofils und der zumindest einen Batteriezelle angeordnet sind.

Beispielweise können diese Wärmeleitelemente als Wärmeleitpads ausgeführt sein, die seitlich beidseitig an die Gehäuseflächen des Strangpressprofils und an den Gehäuseboden geklebt werden. Wärmeleitelemente könnte z.B. auch eine abgeschiedene /dispenste Wärmeleitpaste sein.

Gemäß einem zweiten Aspekt der Erfindung, ist ein Fahrzeug mit einer erfindungsgemäßen Batterie angegeben.

Bei dem Fahrzeug handelt es sich beispielsweise um ein Kraftfahrzeug, wie ein Auto, ein Bus oder ein Lastkraftwagen, oder aber auch um ein Schienenfahrzeug, ein Schiff, ein Luftfahrzeug, wie Helikopter oder Flugzeug.

Gemäß einem weiteren Aspekt der Erfindung ist die Verwendung eines Strangpressprofils als Gehäuseboden eines Batteriegehäuses, insbesondere bei einer Fahrzeugbatterie, angegeben.

Gemäß einem weiteren Aspekt der Erfindung ist ein Verfahren zum Herstellen einer Batterie angegeben. Das Verfahren weist die Schritte des Bereitstellens eines Gehäusebodens der Batterie in Form eines wannenförmigen Strangpressprofils, und das Bereitstellen mindestens einer Batteriezelle auf.

Weiterhin ist das Aufbiegen des wannenförmigen Strangpressprofils und das Einsetzen der mindestens einen Batteriezelle in das aufgebogene Strangpressprofil Teil des Verfahrens.

Die Erfindung wird im Folgenden unter Hinweise auf die beigefügten Figuren anhand schematischer Darstellungen bevorzugter Ausführungsbeispiele noch einmal näher erläutert. Hieraus ergeben sich auch weitere Einzelheiten und Vorteile der Erfindung.
Figur 1 zeigt zwei Ausführungsbeispiele zwei verschiedener Strangpressprofile, welche jeweils als Gehäuseboden eines Batteriegehäuses verwendet werden.
Figur 2 zeigt schematische, dreidimensionale Darstellungen der vollständigen Batterien, welche die Strangpressprofile der Figur 1 verwendet.
Figur 3 zeigt ein aufgebogenes Strangpressprofil zur Integration von einer oder mehreren Batteriezellen in dem Strangpressprofil.
Figur 4 zeigt ein Fahrzeug mit einer erfindungsgemäßen Fahrzeugbatterie.

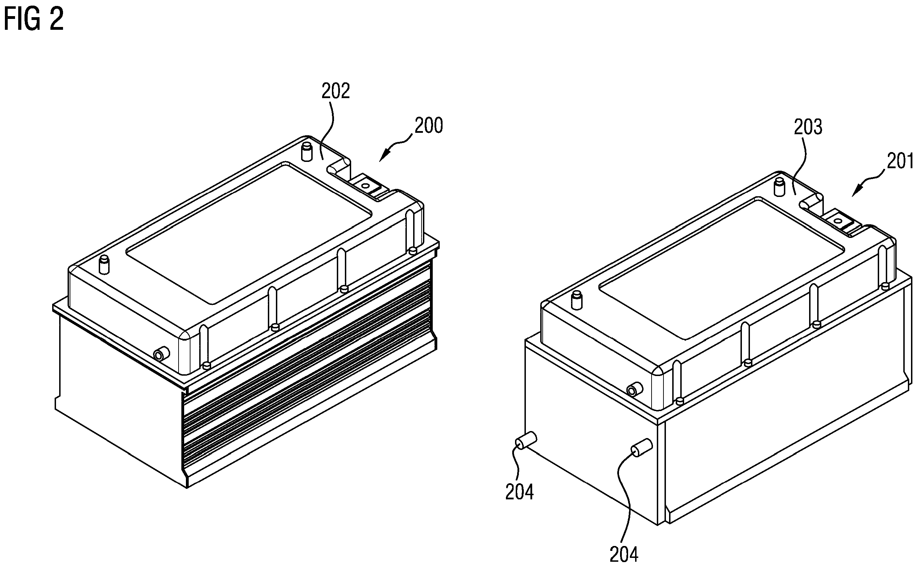

Figur 1 zeigt ein erstes einstückiges Strangpressprofil 100 und ein zweites einstückiges Strangprofil 105, welche beide als Gehäuseboden eines Batteriegehäuses einer Kraftfahrzeugbatterie verwendet werden. Beide Strangpressprofile weisen im Wesentlichen einen U-förmigen Querschnitt auf und sind daher als wannenförmig bezeichnet. Insbesondere weist das Strangpressprofil 100 eine erste Bodenfläche 102 auf, an welche sich die erste Seitenfläche 101 und die zweite Seitenfläche 103 anschließen. Auf der jeweiligen Außenseite der Seitenfläche 101 und 103 sind jeweils Kühlrippen 104 zur passiven Luftkühlung der Batterie angeordnet. Im rechten Ausführungsbeispiel der Figur 1 weist das Strangpressprofil 105 ebenso eine Bodenfläche 106 und zwei seitliche Seitenwände 107 und 108 auf. Jedoch ist in diesem Ausführungsbeispiel das Kühlsystem dadurch bewerkstelligt, dass Kühlkanäle 109 in den beiden seitlichen Seitenwänden 107 und 108 angeordnet sind. In entsprechenden Endkappen, die auf die beiden zunächst offenen Stirnseiten aufgebracht werden, sind dann sich anschließende Kanäle, um einen geschlossenen Kühlreislauf bereitzustellen. Wie der Figur 2, rechtes Ausführungsbeispiel entnommen werden kann, sind dort Flüssigkeitsanschlüsse 204 gezeigt, welche in das entsprechende Kühlkanalsystem einführen.

Gemäß dem erfindungsgemäßen Verfahren zum Herstellen einer Batterie sind das Bereitstellen eines Gehäusebodens der Batterie in Form eines wannenförmigen Strangpressprofils, und das Bereitstellen mindestens einer Batteriezelle erste Verfahrensschritte. Weiterhin ist das Aufbiegen des wannenförmigen Strangpressprofils und das Einsetzen der mindestens einen Batteriezelle in das aufgebogene Strangpressprofil Teil des Verfahrens.

Figur 2 zeigt die zwei vollständig zusammengebauten Batterien, welche sich aus der Verwendung der Strangpressprofile 100 und 105, wie in der Figur 1 gezeigt, ergeben. Die beiden Batterien 200 und 201 unterscheiden sich daher durch die Verwendung unterschiedlicher Gehäuseböden in Form von wannenförmigen unterschiedlichen Strangpressprofilen. Im linken Ausführungsbeispiel der Figur 2 ist der Gehäusedeckel der Batterie mit 202 im rechten Ausführungsbeispiel mit 203 bezeichnet.

Im Folgenden werden weitere Aspekte des Zusammenfügens der weiteren Komponenten der Batterie zwischen dem Stadium, gezeigt in Figur 1, und der finalen Batterie, gezeigt in Figur 2, beschrieben werden.

Zunächst wird im Folgenden ein detailliertes Ausführungsbeispiel angegeben, bei dem eine erfindungsgemäße Batterie mit passiver Kühlung zusammengesetzt wird. In diesem Ausführungsbeispiel weist die Batterie mehrere Batteriezellen auf. Beispielsweise werden zwölf Batteriezellen bereitgestellt, wobei zwischen zwei benachbarten Batteriezellen jeweils eine Isolierfolie zur Zellisolierung verwendet wird. Eine solche Isolierfolie kann beispielweise beidseitig klebend zur Zellfixierung ausgeführt sein. Daraufhin wird ein sogenannter Zell-Stack gebildet, in dem mehrere Batteriezellen aneinander- oder aufeinandergefügt werden. Anschließend werden zwei Druckplatten bereitgestellt, welche zum Vorspannen der Batteriezellen am oberen und unteren Ende des Batterie-Stacks angeordnet werden. Anschließend kann eine Wärmeleitplatte auf einer Montagevorrichtung positioniert werden, wobei anschließend der vorgespannte Batterie-Stack auf die Wärmeleitplatte, der hier als Boden fungiert, geklebt wird. Die Wärmeleitplatte kann auch eine Folie oder Paste sein.

Die Montagereihenfolge am Beispiel quer eingelegter prismatischer Zellen kann wie folgt sein:
- Die gegeneinander elektrisch isolierten Batteriezellen werden gestackt.
- Der Stack wird mit zwei Druckplatten vorgespannt. Die Druckplatten liegen dann jeweils an die Stirnflächen der beiden äußeren Zellen an, also bezogen auf das Strangpressprofil längsseitig.
- Die Vorspannung wird aufrechterhalten. Vorbaugruppe Stack mit Druckplatten.
- Der Gehäuseboden wird mit Wärmeleitpads bzw. -paste am Gehäuseboden und den Seitenflächen ausgestattet und aufgebogen.
- Der vorgespannte Zellstack wird mit Druckplatten in das Strangpressprofil eingesetzt.
- Die Druckplatten werden im immer noch vorgespannten Zustand mit der Gehäusewanne verschweißt (vorzugsweise gas- und flüssigkeitsdicht). Bei passiv gekühlter Variante könnten die Druckplatten bei Dichtigkeit auch als Endkappen dienen.
- Die Druckplatten können dabei auf den Stirnflächen des Strangpressprofils aufliegen (Zellen sind auf Weg verspannt) oder in das Strangpressprofil formschlüssig einsinken (Zellen sind auf Kraft verspannt und ein leichter Toleranzausgleich in Längsrichtung ist gewährleistet).
- Nach dem Schweißen wird die Vorspannkraft dann durch das Strangpressprofil aufrecht erhalten, da dieses nun als Zuganker dient (wäre bei längs eingelegten Zellen nicht der Fall).
- An den Stirnflächen "über" den Druckplatten können jetzt Endkappen zum Abdichten (über Dichtung, Dichtpasten, etc.) oder zur Ausbildung eines Kühlkanals oder weiterer Erfordernisse (Steckerbereitstellung, Gasauslass, etc.) angeordnet werden.
- Anschließend wird das Gehäuse mittels einer Dichtung/-paste mit einem Deckel gas-und flüssigkeitsdicht (je nach IP Klasse) verschlossen.

Anschließend wird der Gehäuseboden in Form eines u-förmigen Strangpressprofils, insbesondere in Form einer Wanne, bereitgestellt. Weitere Wärmeleitelemente für die Seitenwände und des Gehäusebodens werden an den Seitenflächen und am Gehäuseboden angeordnet. Beispielsweise können Wärmeleitpads einseitig klebend an den Seitenwänden und am Gehäuseboden des Strangpressprofils verklebt werden. Anschließend können die Seitenflächen des Gehäusebodens aufgebogen werden und zwar im elastischen Bereich des Materials, siehe Figur 3. Anschließend erfolgt das Einsetzten des mit Druckplatten vorgespannten Batterie-Stacks in den wannenförmigen Gehäuseboden. Anschließend erfolgt ein Zurückbiegen bzw. -federn der Seitenwände des Strangpressprofils ggf. durch Nachdrücken in den Ursprungszustand des Strangpressprofils. Zusätzlich werden Druckplatten an den beiden Stirnseiten des Strangpressprofils angeschweißt und beidseitig können an der Stirnseite Endkappen positioniert werden um mit dem Gehäuse umlaufend verschweißt zu werden (oder verschraubt oder bei Kunststoff heiß verstemmt, etc.). Seitliche Spalte werden dabei dicht geschweißt oder mit zuvor eingelegten oder aufgebrachten Dichtungen abgedichtet. Insbesondere erfolgt dadurch am Gehäuse per z.B. Schweißen ein seitliches Abdichten, so dass insgesamt ein flüssigkeitsdichtes und gasdichtes Batteriegehäuse entsteht. Anschließend kann das Anbringen von Bus-Bars, Polanschlüssen Kontaktpolen und Leiterplatten auf der Batterie erfolgen. Ebenso kann anschließend an der Batterie ein Fahrzeugstecker mit entsprechender Dichtung angebracht werden. Anschließend erfolgt das Aufbringen eines Gehäusedeckels zusammen mit sogenannten Polausgleichselementen. Mittels einer Dichtmasse kann die Batterie anschließend am Gehäuse abgedichtet werden.

Das Abdichten der einzelnen Elemente muss nicht zum Schluss erfolgen, sondern kann bei Montage der entsprechenden Elemente durch Einlegen oder Aufbringen eines Dichtelements (erfolgen oder aber durch "Dichtschweißen").

In einem anderen Ausführungsbeispiel, welches aktive Kühlung mit den zuvor beschriebenen Kühlkanälen in den Seitenwänden des Strangpressprofils benutzt, kann das zuvor beschriebene Herstellungs- bzw. Montageverfahren ebenso verwendet werden. Jedoch können hier die Endkappen beispielweise einteilig oder mehrteilig, insbesondere dreiteilig ausgeführt sein. Wie viele Teile eine Endkappe aufweist kommt sehr stark auf den Anwendungsfall an, und grundsätzlich sind viele Varianten denkbar.

In der Figur 3, ist ein Querschnitt eines Strangpressprofils 300 gezeigt, welches im elastischen Bereich aufgebogen wird, und darin eine Batteriezelle oder Batteriezellstack bei der Herstellung einer erfindungsgemäßen Batterie eingesetzt wird. Die beiden Seitenflächen 301 und 302 sind daher seitlich aufgebogen und ermöglichen es in das Innere 303 des Strangpressprofils die eine oder mehrere Batteriezellen einzusetzen. Anschließend werden die beiden Seitenwände 301 und 302 wieder in ihre ursprüngliche Form "zurückgebogen".

Figur 4 zeigt ein Fahrzeug 400, welches mit einer erfindungsgemäßen Batterie 401 ausgestattet ist. Die Batterie muss nicht zwingend im Motorraum liegen und könnte z.B. auch in den Kofferraum integriert sein. Bei dem Fahrzeug handelt es sich beispielsweise um ein Auto, es könnte aber ebenso ein Bus oder Lastkraftwagen, oder aber auch ein Schienenfahrzeug, ein Schiff, ein Luftfahrzeug, wie Helikopter oder Flugzeug mit der erfindungsgemäßen Batterie versehen sein. Mit anderen Worten wird damit ein Strangpressprofil in Wannenform bzw. in U-Form als Teil des Batteriegehäuses verwendet, wobei das Strangpressprofil an den Stirnseiten zunächst offen ist. Das Strangpressprofil weist daher einen ersten Bodenabschnitt auf, von dem sich zwei Seitenflächen an gegenüberliegenden Seiten des Bodenabschnitts bzw. der Bodenfläche nach obenhin erstrecken. Dies ermöglicht sowohl den Einsatz passiver als auch aktiver Kühlung und ist modular einsetzbar. Vorteilhafterweise kann durch Aufbiegen des Strangpressprofils eine formschlüssige Integration der Batteriezellen erreicht werden. Dieses Konzept kann gleichermaßen für prismatische und für Pouch-Batteriezellen eingesetzt werden.

## Patentansprüche

1. Batterie für ein Kraftfahrzeug, die Batterie aufweisend einen Gehäuseboden,
mindestens eine Batteriezelle, und
wobei der Gehäuseboden als Strangpressprofil in Form einer Wanne ausgeführt ist, wobei
das Strangpressprofil eine Bodenfläche und zwei sich im Wesentlichen von der Bodenfläche senkrecht erstreckenden seitlichen Seitenflächen aufweist, und
das Strangpressprofil an beiden Stirnseiten offen ist, wobei das Strangpressprofil aus Metall ausgebildet ist, und
die beiden Seitenflächen und die zumindest eine Batteriezelle derart zueinander angeordnet sind, dass die beiden Seitenflächen eine Vorspannkraft auf die Batteriezelle ausüben.

2. Batterie gemäß Anspruch 1,
wobei das Strangpressprofil aus Aluminium, ausgeführt ist,
wobei das Strangpressprofil Kühlrippen zur passiven Luftkühlung der Batterie aufweist, und/oder
wobei das Strangpressprofil Kühlkanäle zur aktiven Flüssigkeitskühlung der Batterie aufweist.

3. Batterie nach Anspruch 2
wobei die Kühlrippen und/oder Kühlkanäle zumindest in einer der beiden Seitenflächen des Strangpressprofils verlaufen.

4. Batterie gemäß einem der vorherigen Ansprüche, weiterhin aufweisend
eine erste Endkappe zum Verschließen einer ersten Stirnseite des Strangpressprofils, und
eine zweite Endkappe zum Verschließen einer zweiten Stirnseite des Strangpressprofils.

5. Batterie gemäß Anspruch 4,
wobei die beiden Endkappen die beiden Stirnseiten des Strangpressprofils mittels einer oder mehreren Schweißnähten und/oder einer Dichtung flüssigkeitsdicht und/oder gasdicht verschließen.

6. Batterie gemäß Anspruch 4 oder 5,
wobei zumindest eine Endkappe Kühlkanäle aufweist, welche derart angeordnet sind, dass zusammen mit Kühlkanälen des Strangpressprofils ein geschlossener Kühlkreislauf bereitgestellt wird.

7. Batterie gemäß einem der vorhergehenden Ansprüche, weiterhin aufweisend
drei Wärmeleitelemente, die jeweils zwischen einer Seitenfläche und dem Boden des Strangpressprofils und der zumindest einen Batteriezelle angeordnet sind.

8. Fahrzeug mit einer Batterie gemäß einem der vorhergehenden Ansprüche.

9. Verfahren zum Herstellen einer Batterie, das Verfahren aufweisend die Schritte:
Bereitstellen eines Gehäusebodens der Batterie in Form eines wannenförmigen Strangpressprofils, wobei das Strangpressprofil eine Bodenfläche und zwei sich im Wesentlichen von der Bodenfläche senkrecht erstreckenden seitlichen Seitenflächen aufweist, das Strangpressprofil an beiden Stirnseiten offen ist, und das Strangpressprofil aus Metall ausgebildet ist;
Bereitstellen mindestens einer Batteriezelle, und Aufbiegen des wannenförmigen Strangpressprofils, insbesondere im elastischen Bereich, und Einsetzen der mindestens einen Batteriezelle in das aufgebogene Strangpressprofil, wobei die beiden Seitenflächen und die zumindest eine Batteriezelle derart zueinander angeordnet sind, so dass über die beiden Seitenflächen eine Vorspannkraft auf die Batteriezelle ausgeübt wird.

## Claims

1. Battery for a motor vehicle, the battery having a housing base and
at least one battery cell,
wherein the housing base is designed as an extruded profile in the form of a tub, wherein
the extruded profile has a base surface and two lateral side surfaces extending substantially perpendicularly from the base surface, and
the extruded profile is open at both end sides, wherein the extruded profile is formed from metal, and the two side surfaces and the at least one battery cell are arranged relative to each other in such a way that the two side surfaces exert a prestressing force on the battery cell.

2. Battery according to Claim 1,
wherein the extruded profile is formed from aluminium,
wherein the extruded profile has cooling fins for passive air-cooling of the battery, and/or
wherein the extruded profile has cooling ducts for active liquid-cooling of the battery.

3. Battery according to Claim 2,
wherein the cooling fins and/or cooling ducts run at least in one of the two side surfaces of the extruded profile.

4. Battery according to one of the preceding claims, further having
a first end cap for closing a first end side of the extruded profile, and
a second end cap for closing a second end side of the extruded profile.

5. Battery according to Claim 4,
wherein the two end caps close the two end sides of the extruded profile in a liquid-tight and/or gas-tight manner by means of one or more weld seams and/or a seal.

6. Battery according to Claim 4 or 5,
wherein at least one end cap has cooling ducts, which are arranged in such a way that a closed cooling circuit is provided together with cooling ducts of the extruded profile.

7. Battery according to one of the preceding claims, further having
three heat-conducting elements, which are respectively arranged between a side surface and the base of the extruded profile and the at least one battery cell.

8. Vehicle comprising a battery according to one of the preceding claims.

9. Method for producing a battery, the method comprising the steps of:
providing a housing base of the battery in the form of a tub-like extruded profile, wherein the extruded profile has a base surface and two lateral side surfaces extending substantially perpendicularly from the base surface,
the extruded profile is open at both end sides, and the extruded profile is formed from metal; providing at least one battery cell, and bending open the tub-like extruded profile, in particular in the elastic region, and inserting the at least one battery cell into the bent-open extruded profile, wherein the two side surfaces and
the at least one battery cell are arranged relative to each other in such a way that a prestressing force is exerted on the battery cell by means of the two side surfaces.

## Revendications

1. Batterie pour un véhicule automobile, la batterie présentant un fond de boîtier et
au moins une cellule de batterie,
dans laquelle le fond de boîtier est réalisé en tant que profilé extrudé sous forme de cuve, dans laquelle
le profilé extrudé présente une surface de fond et deux surfaces latérales de côté s'étendant verticalement à partir de la surface de fond, et
le profilé extrudé est ouvert au niveau des deux faces frontales, dans lequel le profilé extrudé est réalisé en métal, et les deux surfaces latérales et ladite au moins une cellule de batterie sont disposées les unes par rapport aux autres de telle sorte que les deux surfaces latérales exercent une force de précontrainte sur la cellule de batterie.

2. Batterie selon la revendication 1,
dans laquelle le profilé extrudé est réalisé en aluminium,
dans laquelle le profilé extrudé présente des ailettes de refroidissement pour le refroidissement à air passif de la batterie, et/ou
dans lequel le profilé extrudé présente des canaux de refroidissement pour le refroidissement par liquide de la batterie.

3. Batterie selon la revendication 2,
dans laquelle les ailettes de refroidissement et/ou les canaux de refroidissement s'étendent dans au moins l'une des deux surfaces latérales du profilé extrudé.

4. Batterie selon l'une quelconque des revendications précédentes, présentant en outre
un premier embout pour fermer une première face frontale du profilé extrudé, et
un deuxième embout pour fermer une deuxième face frontale du profilé extrudé.

5. Batterie selon la revendication 4,
dans laquelle les deux embouts ferment les deux faces frontales du profilé extrudé au moyen d'un ou de plusieurs joints de soudure et/ou d'un joint d'étanchéité de manière étanche au fluide et/ou étanche au gaz.

6. Batterie selon la revendication 4 ou 5,
dans laquelle au moins un embout présente des canaux de refroidissement qui sont disposés de façon à fournir un circuit de refroidissement fermé conjointement avec les canaux de refroidissement du profilé extrudé.

7. Batterie selon l'une quelconque des revendications précédentes, présentant en outre
trois éléments thermoconducteurs qui sont respectivement disposés entre une surface latérale et le fond du profilé extrudé et ladite au moins une cellule de batterie.

8. Véhicule, comprenant une batterie selon l'une quelconque des revendications précédentes.

9. Procédé de fabrication d'une batterie, le procédé présentant les étapes suivantes consistant à :
fournir un fond de boîtier de la batterie sous la forme d'un profilé extrudé en forme de cuve, dans lequel le profilé extrudé présente une surface de fond et deux surfaces latérales de côté s'étendant verticalement à partir de la surface de fond,
le profilé extrudé est ouvert au niveau des deux faces frontales, et le profilé extrudé est réalisé en métal ;
fournir au moins une cellule de batterie, et déplier le profilé extrudé en forme de cuve, en particulier dans la zone élastique, et insérer ladite au moins une cellule de batterie dans le profilé extrudé déplié, dans lequel les deux surfaces latérales et ladite au moins une cellule de batterie sont disposées les unes par rapport aux autres de telle sorte que les deux surfaces latérales exercent une force de précontrainte sur la cellule de batterie.
